# EUROPEAN PATENT APPLICATION

(11) **EP 3 056 942 A1**
(43) Date of publication of application: **17.08.2016**
(21) Application number: 16155226.0
(22) Date of filing: 11.02.2016
(51) Int. Cl.: G02F 1/167

(54) **ELECTROPHORESIS DISPLAY APPARATUS, MANUFACTURING METHOD OF ELECTROPHORESIS DISPLAY APPARATUS, AND ELECTRONIC DEVICE**

(30) Priority: 13.02.2015 JP 2015026180
(71) Applicant: Seiko Epson Corporation, Shinjuku-ku Tokyo 163-0811 (JP)
(72) Inventor: Nakashima, Yoshiki, Suwa-shi, Nagano 392-8502 (JP)
(74) Representative: Hoffmann Eitle

(57) **Abstract**

Provided is an electrophoresis display apparatus in which light is unlikely to be reflected by a partition wall part and which realizes high contrast. An electrophoresis display apparatus 1 is provided with a first base member 8 on which a semiconductor elements 9c are arranged, a second base member 16 facing the first base member 8, and partition walls 5 that are positioned between the first base member 8 and the second base member 16 and partition pixel regions 6, and has a reflection reduction film 7 that reduces light reflection in a location facing the partition walls 5, as viewed from a second base member 16 side.

## Description

### BACKGROUND

### 1. Technical Field

The present invention relates to an electrophoresis display apparatus, a method for manufacturing the electrophoresis display apparatus, and an electronic device.

### 2. Related Art

Electrophoresis display apparatuses in which particles having an electric charge move in a dispersion medium are widely known. Electrophoresis display apparatuses have little screen flicker, and thus are used as display apparatuses and the like for viewing electronic books. Such an electrophoresis display apparatus is disclosed in JP-A-2008-51932. According to this patent document, an electrophoresis display apparatus is provided with a pair of substrates, each of which has an electrode arranged thereon. A dispersion medium that contains white charged particles and black charged particles are arranged between the electrodes.

In this electrophoresis display apparatus, the white charged particles are negatively charged, and the black charged particles are positively charged. In addition, by applying voltages to the electrodes arranged on the substrates facing each other, the black charged particles are attracted to one electrode, and the white charged particles are attracted to the other electrode. Next, the position of the black charged particles and the position of the white charged particles are switched by switching the voltages of the electrodes.

A partition wall part is arranged between the substrates, the partition wall part dividing the dispersion medium in a grid shape. A portion surrounded by the partition wall part is one pixel. A predetermined graphic can be displayed by controlling the positions of the black charged particles and white charged particles on a pixel-by-pixel basis.

Light that is irradiated onto an electrophoresis display apparatus is irradiated onto the partition wall part and pixel regions. In the electrophoresis display apparatus of JP-A-2008-51932, the light that is irradiated onto the partition wall part is reflected. Accordingly, when the pixel regions undergo black display, the light is reflected by the partition wall part, and thus the luminance does not decrease. For this reason, the electrophoresis display apparatus does not realize high contrast. In view of this, an electrophoresis display apparatus has been demanded in which light is not readily reflected by the partition wall part and which thus realizes high contrast.

### SUMMARY

An advantage of some aspects of the invention is to solve the above-described problem, and the invention can be realized as the following modes or application examples.

### Application Example 1

An electrophoresis display apparatus according to this application example includes: a first substrate on which a semiconductor element is arranged; a second substrate that faces the first substrate; and a partition wall part that is positioned between the first substrate and the second substrate and partitions pixel regions, wherein an electrophoresis dispersion liquid containing charged particles is held in each of the regions partitioned by the partition wall part as viewed from a normal direction of the second substrate, and the electrophoresis display apparatus has, in a region that overlaps the partition wall part, a reflection reduction part that reduces reflection of light.

According to this application example, in the electrophoresis display apparatus, a first substrate and a second substrate sandwich the partition wall part. The partition wall part partitions the pixel regions. The pixel regions are locations in which charged particles move and display that is visible to an observer changes. Light that is irradiated onto the electrophoresis display apparatus is irradiated onto the reflection reduction part and the pixel regions. The reflection reduction part reduces reflection of the light. Therefore, light that proceeds from other than the pixel regions toward the observer can be reduced. As a result, reflection of the light that is irradiated onto the partition wall part is reduced by the reflection reduction part, thereby making it possible to heighten the contrast.

### Application Example 2

In the electrophoresis display apparatus according to the above application example, it may be preferable that the reflection reduction part is positioned between the second substrate and the partition wall part.

According to this application example, the reflection reduction part is positioned between the second substrate and the partition wall part. Light that is irradiated onto the second substrate is irradiated onto the reflection reduction part and the pixel regions. The reflection reduction part reduces reflection of the irradiated light. A portion of the light that is irradiated onto the pixel regions proceeds obliquely to the thickness direction of the second substrate. This portion of the light passes through the pixel regions and proceeds into the partition wall part. Light that does not pass through the pixel regions and heads from the partition wall part toward the observer passes through the reflection reduction part, thereby reducing the intensity of the light. Therefore, light that proceeds from other than the pixel regions toward the observer can be reduced.

### Application Example 3

In the electrophoresis display apparatus according to the above application example, it may be preferable that the reflection reduction part is provided between the first substrate and the partition wall part.

According to this application example, the reflection reduction part is arranged between the first substrate and the partition wall part. Light that passes through the second substrate and the partition wall part and proceeds toward the first substrate is irradiated onto the reflection reduction part. Because the reflection reduction part reduces reflection of the light, the intensity of the light that passes through the partition wall part and is reflected by the reflection reduction part is reduced. Therefore, the reflection intensity of the light that is irradiated onto the partition wall part can be reduced.

### Application Example 4

In the electrophoresis display apparatus according to the above application example, it may be preferable that the partition wall part also functions as the reflection reduction part.

According to this application example, the partition wall part also functions as the reflection reduction part, and reflection of light that is irradiated onto the partition wall part is reduced. A portion of light that is irradiated onto the pixel regions proceeds obliquely to the thickness direction of the second substrate. This portion of the light passes through the pixel regions and proceeds to the partition wall part. The intensity of the light that is irradiated onto the partition wall part is then reduced. Therefore, light that proceeds from other than the pixel regions toward the observer can be reduced.

### Application Example 5

It may be preferable that the electrophoresis display apparatus according to the above application example includes: an element layer that is positioned on the first substrate and on which the semiconductor element is arranged; and an insulation layer that is positioned on the element layer, wherein the insulation layer also functions as the reflection reduction part.

According to this application example, an insulation layer is arranged on the element layer, and the insulation layer functions as the reflection reduction part. The partition wall part is positioned on the reflection reduction part, and the second substrate is positioned on the partition wall part. Light that passes through the second substrate and the partition wall part is irradiated onto the insulation layer. Because the insulation layer reduces reflection of the light, the intensity of light reflected by the partition wall part is reduced. Therefore, the reflection intensity of the light that is irradiated onto the partition wall part can be reduced.

### Application Example 6

In the electrophoresis display apparatus according to the above application example, it may be preferable that a first electrode is arranged on the first substrate, a second electrode is arranged on the second substrate, and the partition wall part insulates the first electrode and the second electrode from each other.

According to this application example, the first electrode is arranged on the first substrate, and the second electrode is arranged on the second substrate. The partition wall part is sandwiched by the first substrate and the second substrate. Because the partition wall part insulates the first electrode and the second electrode from each other, it is possible to prevent the first electrode and the second electrode from conducting with each other.

### Application Example 7

In the electrophoresis display apparatus according to the above application example, it may be preferable that a resistance value of the partition wall part partitioning two adjacent pixel regions is 1×10⁸ Ω or more.

According to this application example, the resistance of the partition wall part partitioning two adjacent pixel regions is 1×10⁸ Ω or more. Thereby, a current that flows between the first substrate and the second substrate through the partition wall part can be suppressed.

### Application Example 8

An electronic device according to this application example includes: a display part; and a drive part for driving the display part, wherein the display part is the above-described electrophoresis display apparatus.

According to this application example, the electronic device is provided with a display part and a drive part that drives the display part. The drive part drives the display part. The above-described electrophoresis display apparatus is used as the display part. Therefore, the electronic device can be configured as an apparatus in which the electrophoresis display apparatus that realizes high contrast is used as the display part.

### Application Example 9

A manufacturing method of an electrophoresis display apparatus according to this application example involves: arranging a partition wall part by molding a resin material containing carbon on a first substrate; filling an electrophoresis dispersion liquid containing a dispersion medium and charged particles into pixel regions partitioned by the partition wall part, and arranging a second substrate so as to be layered on the partition wall part.

According to this application example, a partition wall part containing carbon is arranged on a first substrate. Next, pixel regions partitioned by the partition wall part are filled with an electrophoresis dispersion liquid containing a dispersion medium and charged particles. Next, a second substrate is arranged so as to be layered on the partition wall part. Accordingly, movement of charged particles between the first substrate side and the second substrate side can be controlled. Because the partition wall part contains carbon, light entering the partition wall part is absorbed by the carbon. Therefore, the reflection intensity of the light irradiated onto the partition wall part can be reduced.

### Application Example 10

In the manufacturing method of an electrophoresis display apparatus according to the above application example, it may be preferable that a resistance value of the partition wall part partitioning two adjacent pixel regions is 1×10⁸ Ω or more.

According to this application example, resistance of the partition wall part partitioning two adjacent pixel regions is 1×10⁸ Ω or more. Thereby, a current that flows between the first substrate and the second substrate through the partition wall part can be suppressed.

### BRIEF DESCRIPTION OF THE DRAWINGS

The invention will be described with reference to the accompanying drawings, wherein like numbers reference like elements.
Figs. 1A and 1B are related to a first embodiment, where Fig. 1A is a schematic perspective diagram showing a structure of an electrophoresis display apparatus, and Fig. 1B is a schematic plan diagram showing a structure of the electrophoresis display apparatus.
Fig. 2 is a partial schematic exploded perspective diagram showing a structure of the electrophoresis display apparatus.
Fig. 3 is an electric control block diagram of the electrophoresis display apparatus.
Figs. 4A and 4B are schematic side cross-sectional views showing a structure of the electrophoresis display apparatus.
Fig. 5 is a schematic diagram for describing the loci of light entering the electrophoresis display apparatus.
Fig. 6 is a flowchart of a manufacturing method of the electrophoresis display apparatus.
Figs. 7A to 7E are schematic diagrams for describing a manufacturing method of the electrophoresis display apparatus.
Figs. 8A to 8C are schematic diagrams for describing a manufacturing method of the electrophoresis display apparatus.
Fig. 9 is a schematic side cross-sectional view showing a structure of an electrophoresis display apparatus according to a second embodiment.
Fig. 10 is a schematic side cross-sectional view showing a structure of an electrophoresis display apparatus according to a third embodiment.
Figs. 11A to 11C are schematic diagrams for describing a manufacturing method of a partition wall.
Fig. 12 is a schematic side cross-sectional view showing a structure of an electrophoresis display apparatus according to a fourth embodiment.
Fig. 13A and 11B are related to a fifth embodiment, where Fig. 13A is a schematic perspective diagram showing a structure of an electronic book, and Fig. 13B is a schematic perspective diagram showing a structure of a watch.

### DESCRIPTION OF EXEMPLARY EMBODIMENTS

In this embodiment, characteristic examples of an electrophoresis display apparatus and a method for manufacturing this electrophoresis display apparatus will be described with reference to the drawings. Note that each of the constituent elements in the drawings is illustrated with a different scale so as to have a size that allows the constituent element to be recognized in the drawing.

### First Embodiment

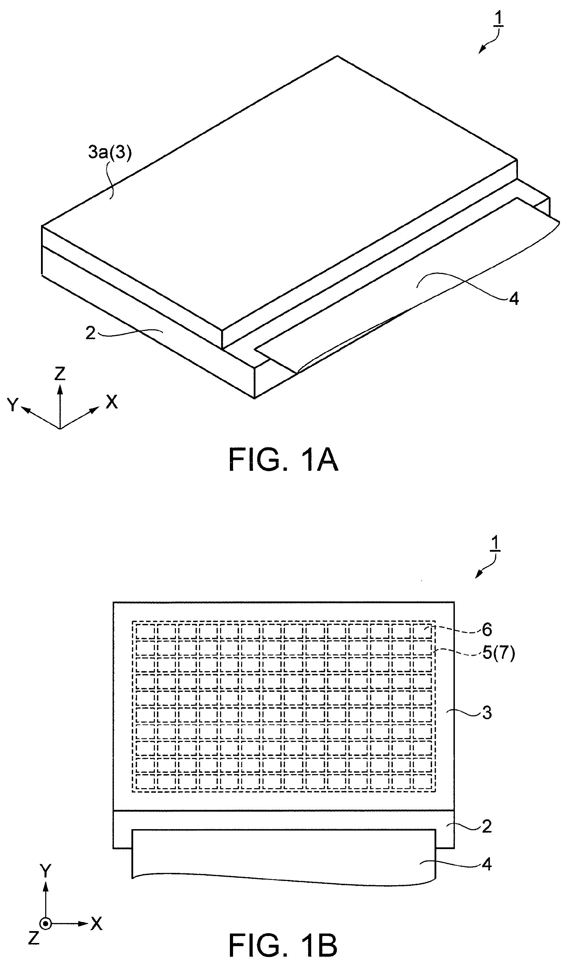

An electrophoresis display apparatus according to a first embodiment will be described with reference to Figs. 1A to 8C. Fig. 1A is a schematic perspective diagram showing the structure of the electrophoresis display apparatus, and Fig. 1B is a schematic plan diagram showing the structure of the electrophoresis display apparatus.

As shown in Fig. 1A, an electrophoresis display apparatus 1 has a structure in which a lower substrate 2 and an upper substrate 3 are layered on each other. Assume that the normal direction of the lower substrate 2 and the upper substrate 3 is a Z direction, and the upper substrate 3 is positioned on the +Z direction side. As an observer views the electrophoresis display apparatus 1, he or she views it from the side in the +Z direction. The surface of the upper substrate 3 on the +Z direction side is an image display surface 3a. The lower substrate 2 and the upper substrate 3 extend in an X direction and a Y direction. The lower substrate 2 has a shape longer than the upper substrate 3 in a -Y direction. On the -Y direction side of the lower substrate 2, a flexible cable 4 is arranged on the surface on the +Z direction side. The flexible cable 4 is connected to a drive circuit (not illustrated), and electricity and a drive signal are supplied via the flexible cable 4.

As shown in Fig. 1B, the electrophoresis display apparatus 1 has partition walls 5 as the partition wall part arranged between the lower substrate 2 and the upper substrate 3. The partition walls 5 have a grid-like shape and partition pixel regions 6. In the figure, the pixel regions 6 are arranged such that 14 pixel regions 6 are aligned in the X direction and 10 pixel regions 6 are aligned in the Y direction in order to make the figure easily visible. The number of pixel regions 6 is not particularly limited, but in this embodiment, for example, arrangement is made such that 300 pixel regions 6 are aligned in the X direction and 200 pixel regions 6 are aligned in the Y direction. Although the size of the pixel regions 6 is not particularly limited, a length in the X direction is 80 µm and a length in the Y direction is 80 µm in this embodiment, for example. Although the size of the electrophoresis display apparatus 1 is also not particularly limited, a length of the lower substrate 2 in the X direction is 30 mm and a length in the Y direction is 25 mm in this embodiment, for example.

On the +Z direction side of the partition walls 5, a reflection reduction film 7 as the reflection reduction part is arranged in a location that faces the partition walls 5. The reflection reduction film 7 absorbs light that proceeds from the side in the +Z direction toward the partition walls 5, and reduces reflection of the light. The reflection reduction film 7 viewed from the Z direction in a plane view has substantially the same shape as the partition walls 5.

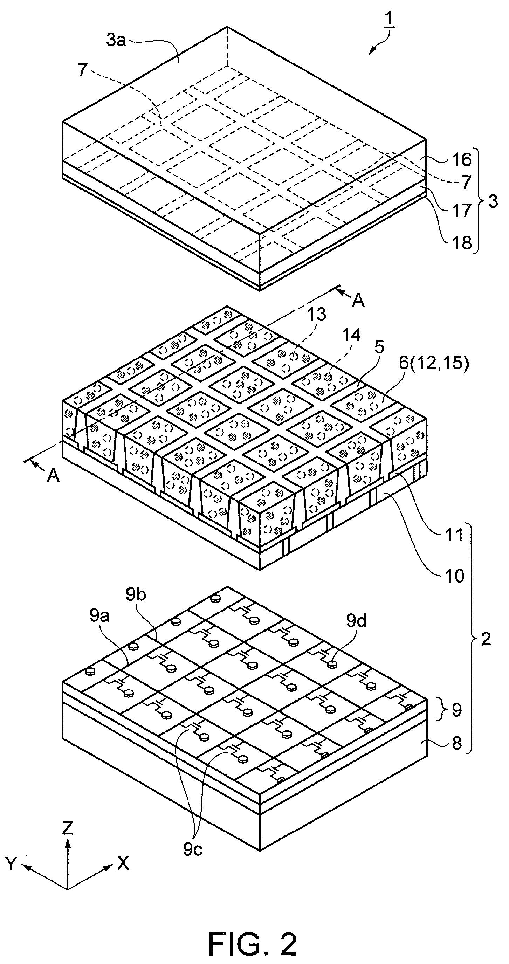

Fig. 2 is a partial schematic exploded perspective diagram showing the structure of an electrophoresis display apparatus, and is a diagram in which a portion of the electrophoresis display apparatus 1 is disassembled in the Z direction. As shown in Fig. 2, the lower substrate 2 is provided with a first base member 8 as the first substrate. The first base member 8 is a substrate made of glass, plastic, ceramic, silicon or the like, and having an insulating property. The first base member 8 is arranged on an opposite side to the image display surface 3a that can be viewed from the +Z direction, and thus may be an opaque material.

An element layer 9 is arranged on the first base member 8. Voltage supply lines 9a, control signal lines 9b, semiconductor elements 9c, through-electrodes 9d and the like are arranged on the element layer 9. The semiconductor elements 9c are TFT (Thin Film Transistor) elements, and are elements for performing switching. An insulation layer 10 is arranged on the element layer 9, and pixel electrodes 11 as the first electrode are arranged on the insulation layer 10. The insulation layer 10 is a layer that insulates the element layer 9 and the pixel electrodes 11 from each other. The through-electrodes 9d are arranged on the element layer 9, and the through-electrodes 9d are connected to the pixel electrodes 11. The pixel electrodes 11 are separated for each of the pixel regions 6. The lower substrate 2 is constituted by the first base member 8, the element layer 9, the insulation layer 10, the pixel electrodes 11 and the like.

It is sufficient that a material of the element layer 9 is a material that can form a semiconductor, and there are no particular limitations thereon. Silicon, germanium, gallium arsenide, gallium arsenide phosphide, gallium nitride, silicon carbide and the like can be used. It is sufficient that a material of the insulation layer 10 is a material having an insulating property and being easily molded, and there are no particular limitations thereon. Glass, resin, silicon oxide, silicon nitride and the like can be used. In this embodiment, for example, acrylic resin is used as the material of the insulation layer 10.

It is sufficient that a material of the pixel electrodes 11 is a material having conductivity, and there are no particular limitations thereon. Copper, aluminum, nickel, gold, silver and ITO (indium-tin oxide) as well as a laminate of a nickel film or a gold film on a copper foil, and a laminate of a nickel film or a gold film on an aluminum foil can be used. In this embodiment, for example, the pixel electrodes 11 have a structure in which a gold film is arranged on an aluminum foil.

The partition walls 5 on the pixel electrodes 11 are arranged in a grid shape, and the pixel regions 6 partitioned by the partition walls 5 are filled with an electrophoresis dispersion liquid 12. It is sufficient that a material of the partition walls 5 is a material having an insulating property and strength and being easy to be formed, and there are no particular limitations thereon.
Acrylic acid resin, epoxy resin and the like can be used. In this embodiment, for example, photosensitive resin is used. Thereby, a resistance value of the partition walls 5 that partition the pixel regions 6 is 1×10⁸ Ω or more. The partition walls 5 insulate the pixel electrodes 11 and a common electrode 17 from each other. The electrophoresis dispersion liquid 12 has white charged particles 13 as charged particles and black charged particles 14 as charged particles, and the white charged particles 13 and the black charged particles 14 are dispersed in a dispersion medium 15.

It is sufficient that a material of the white charged particles 13 is white and chargeable and can be formed into fine particles, and there are no particular limitations thereon. As the material of the white charged particles 13, for example, particles, high polymer or a colloid that are made of white pigment such as titanium dioxide, zinc oxide or antimony trioxide can be used. In this embodiment, for example, particles of titanium dioxide are positively charged and used as the white charged particles 13.

It is sufficient the black charged particles 14 are black and chargeable and can be formed into fine particles, and there are no particular limitations thereon. As the material of the black charged particles 14, for example, particles, high polymer or a colloid that are made of black pigment such as aniline black, carbon black or titanium oxynitride can be used. In this embodiment, for example, titanium oxynitride is negatively charged and used as the black charged particles 14. In the white charged particles 13 and the black charged particles 14, a charge control agent such as an electrolyte, a surfactant, metallic soap, resin, rubber, oil, varnish, or compound can be used in these particles as necessary. Additionally, a dispersant such as a titanium-based coupling agent, an aluminum-based coupling agent, or a silane-based coupling agent, a lubricant, a stabilizer or the like can be added to the white charged particles 13 and the black charged particles 14.

It is sufficient that the dispersion medium 15 is made of a material that has fluidity and does not readily decompose, and there are no particular limitations thereon. As the material of the dispersion medium 15, water, alcohol-based solvents such as methanol, ethanol, isopropanol, butanol, octanol and methyl cellosolve, esters such as ethyl acetate and butyl acetate, ketones such as acetone, methyl ethyl ketone and methyl isobutyl ketone, aliphatic hydrocarbon such as pentane, hexane and octane, and alicyclic hydrocarbon such as cyclohexane and methylcyclohexane can be used. Additionally, as the material of the dispersion medium 15, aromatic hydrocarbon such as benzen, toluene, xylene and benzens having a long-chain alkyl group can be used. As the benzens having a long-chain alkyl group, hexylbenzen, heptyl benzene, octyl benzene, nonyl benzene, decyl benzene, undecyl benzene, dodecyl benzene, tridecyl benzene, tetradecyl benzene and the like can be used. Additionally, as the dispersion medium 15, halogenated hydrocarbon such as methylene chloride, chloroform, carbon tetrachloride, 1, 2-dichloroethane can be used. Additionally, oils and silicone oil can be used as the material of the dispersion medium 15. These substances can be used alone or as a compound, and furthermore, a surfactant such as carboxylate or the like may be blended.

The upper substrate 3 is arranged on the partition walls 5 and the electrophoresis dispersion liquid 12. The upper substrate 3 is provided with a second base member 16 as a second substrate. The reflection reduction film 7 is arranged on the second base member 16. The reflection reduction film 7 has a grid shape similarly to the partition walls 5, and is positioned in a location facing the partition walls 5. The reflection reduction film 7 has a shape of a thin film. The common electrode 17 as the second electrode is arranged so as to cover the second base member 16 and the reflection reduction film 7, and an adhesion layer 18 is arranged on the common electrode 17. The common electrode 17 is a common electrode that is arranged over a plurality of the pixel regions 6. Therefore, the common electrode 17 faces a plurality of the pixel electrodes 11. The adhesion layer 18 has a function of adhering the partition walls 5 and the upper substrate 3 to each other.

It is sufficient that a material of the second base member 16 has a light-transmitting property, strength and an insulating property, and there are no particular limitations thereon. Glass or a resin material can be used as the material of the second base member 16. In this embodiment, for example, a glass plate is used as the material of the second base member 16. It is sufficient that the reflection reduction film 7 is made of a material that absorbs light and is easy to be arranged in a shape of a thin film, and there are no particular limitations thereon. Metal such as chromium or molybdenum can be used. In this embodiment, for example, molybdenum is used as the material of the reflection reduction film 7.

It is sufficient that the common electrode 17 is a transparent conductive film, and there are no particular limitations thereon. For example, MgAg, IGO (Indium-galliumoxide), ITO (Indium Tin Oxide), ICO (Indium-ceriumoxide), IZO (indium zinc oxide) and the like can be used for the common electrode 17. In this embodiment, ITO is used for the common electrode 17, for example.

It is sufficient that a material of the adhesion layer 18 can adhere the partition walls 5 and the upper substrate 3 to each other, and does not deteriorate the electrophoresis dispersion liquid 12, and there are no particular limitations thereon. For example, as the material of the adhesion layer 18, acrylic acid resin such as polyurethane, polyurea, polyurea-polyurethane, ureaformaldehyde resin, melamine-formaldehyde resin, polyamide, polyester, polysulfonamide, polycarbonate, polysulfinate, epoxy resin and polyacrylic ester, polymethacrylate, polyvinyl acetate, gelatin, phenolic resin, vinyl resin and the like can be used. In this embodiment, for example, ultraviolet curing type acrylic resin and epoxy resin are used.

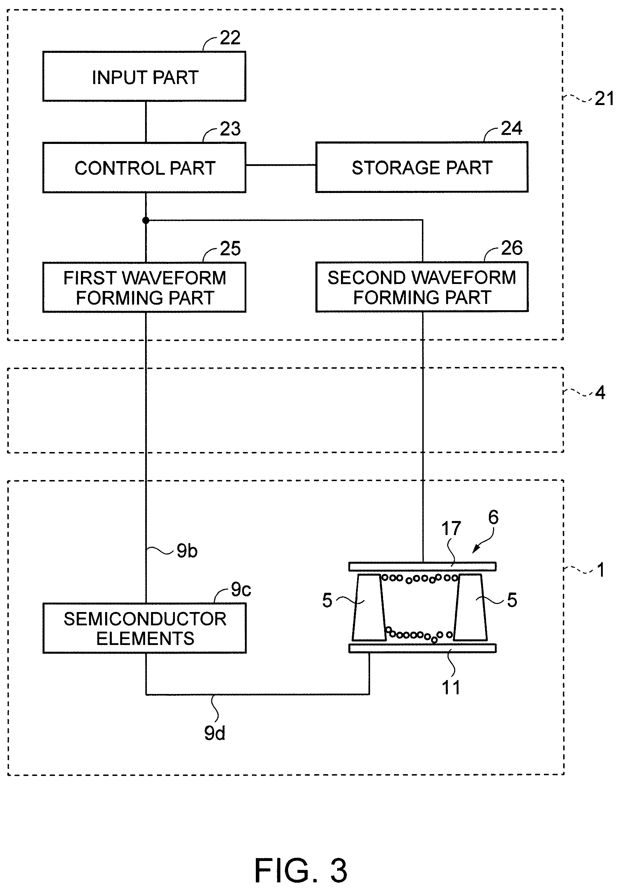

Fig. 3 is an electric control block diagram of an electrophoresis display apparatus. As shown in Fig. 3, the electrophoresis display apparatus 1 is connected to a drive apparatus 21 when used. The drive apparatus 21 is provided with an input part 22, and the input part 22 is connected to an apparatus that outputs an image signal indicating an image to be displayed on the electrophoresis display apparatus 1, and inputs the image signal. The input part 22 is connected to a control part 23. The control part 23 is connected to a storage part 24, a first waveform forming part 25 and a second waveform forming part 26.

The storage part 24 stores, besides the image signal, information that is used when forming a signal for driving the electrophoresis display apparatus 1 from the image signal. The control part 23 is a part that controls the first waveform forming part 25 and the second waveform forming part 26. The control part 23 transmits the image signal input from the input part 22 to the first waveform forming part 25 and the second waveform forming part 26. Furthermore, the control part 23 transmits information that is used when the first waveform forming part 25 and the second waveform forming part 26 form a waveform.

The first waveform forming part 25 forms a drive signal for driving the semiconductor elements 9c. The second waveform forming part 26 forms a voltage waveform for driving the common electrode 17. The first waveform forming part 25 is connected to the semiconductor elements 9c via the flexible cable 4 and the control signal lines 9b, and outputs the drive signal for each pixel to the semiconductor elements 9c. The semiconductor elements 9c are connected to the pixel electrodes 11, and output a voltage corresponding to the drive signal to the pixel electrodes 11. The second waveform forming part 26 is connected to the common electrode 17 via the flexible cable 4, and outputs a voltage waveform to the common electrode 17.

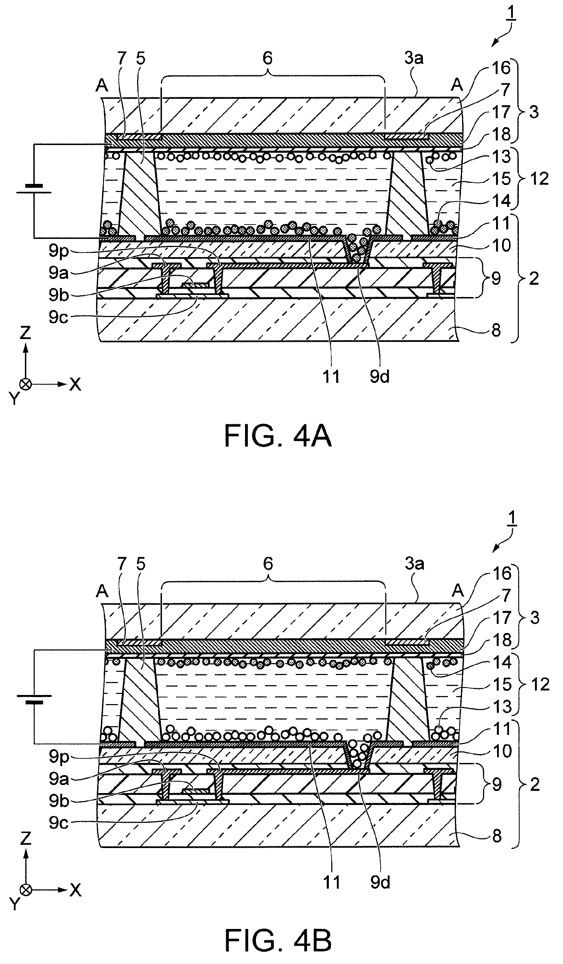

Fig. 4 is a schematic side cross-sectional view showing the structure of an electrophoresis display apparatus, and is a cross-sectional view taken along a line A-A in Fig. 2. As shown in Fig. 4A, the electrophoresis display apparatus 1 is used with a voltage being applied between the pixel electrodes 11 and the common electrode 17. Display can be changed by switching relative voltages between the pixel electrodes 11 and the common electrode 17.

A voltage of the common electrode 17 is set to be lower than that of the pixel electrodes 11. At this time, because the black charged particles 14 are charged to a cathode voltage, the black charged particles 14 are attracted to the pixel electrodes 11. Because the white charged particles 13 are charged to an anode voltage, the white charged particles 13 are attracted to the common electrode 17. As a result, the black charged particles 14 gather on the lower substrate 2, and the white charged particles 13 gather on the upper substrate 3. As the electrophoresis display apparatus 1 is viewed from the upper substrate 3 side, an observer can see the white charged particles 13 through the upper substrate 3. Therefore, the pixel regions 6 undergo white display.

Drain electrodes 9p are arranged so as to be connected to the semiconductor elements 9c, and the through-electrodes 9d are arranged so as to be connected to the drain electrode 9p. Thereby, the semiconductor elements 9c are electrically connected to the pixel electrodes 11.

As shown in Fig. 4B, a voltage of the common electrode 17 is set to be higher than that of the pixel electrodes 11. At this time, because the black charged particles 14 are charged to a cathode voltage, the black charged particles 14 are attracted to the common electrode 17. Because the white charged particles 13 are charged to an anode voltage, the white charged particles 13 are attracted to the pixel electrodes 11. As a result, the white charged particles 13 gather on the lower substrate 2, and the black charged particles 14 gather on the upper substrate 3. As viewing the electrophoresis display apparatus 1 from the upper substrate 3 side, the observer can see the black charged particles 14 through the upper substrate 3. Therefore, the pixel regions 6 undergo black display.

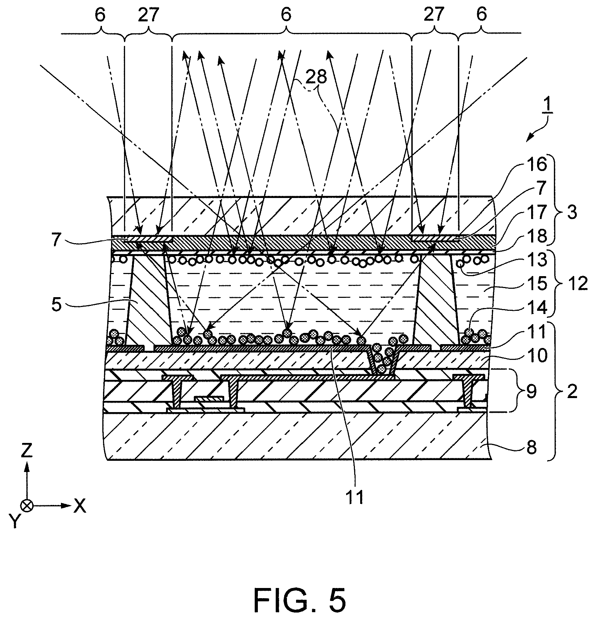

Fig. 5 is a schematic diagram for describing the loci of light entering an electrophoresis display apparatus. As shown in Fig. 5, the white charged particles 13 are attracted to the common electrode 17, and the black charged particles 14 are attracted to the pixel electrodes 11. Therefore, the pixel regions 6 in the figure undergo white display. As the electrophoresis display apparatus 1 is viewed from the +Z direction, the pixel regions 6 are white, and regions surrounding the pixel regions 6 are non-pixel regions 27.

Light 28 irradiated onto the electrophoresis display apparatus 1 is irradiated onto the non-pixel regions 27 and the pixel regions 6. Most of the light 28 irradiated onto the pixel regions 6 is irradiated onto the white charged particles 13, is scatteringly reflected by the white charged particles 13, and proceeds in the +Z direction. Thereby, the light 28 reflected in the pixel regions 6 appears to the observer to be white. A portion of the light 28 that is irradiated onto the pixel regions 6 passes through the dispersion medium 15 and is irradiated onto the black charged particles 14 and the lower substrate 2. Because the black charged particles 14 absorb the light 28, it is difficult for the observer to notice the light 28 reflected by the black charged particles 14. The light 28 irradiated onto the reflection reduction film 7, which is a portion of the light 28 reflected by the black charged particles 14 and the lower substrate 2, is absorbed by the reflection reduction film 7. Therefore, the light 28 that proceeds from other than the pixel regions 6 toward the observer can be reduced.

The light 28 irradiated onto the non-pixel regions 27 enters the reflection reduction film 7. Because the reflection reduction film 7 absorbs the light 28, reflection of the light 28 is reduced in the non-pixel regions 27. Therefore, the light 28 that proceeds from other than the pixel regions 6 toward the observer can be reduced.

Similarly, the light 28 irradiated onto the non-pixel regions 27 enters the reflection reduction film 7, when display of the pixel regions 6 undergoes black display. Because the reflection reduction film 7 absorbs the light 28, reflection of the light 28 is reduced in the non-pixel regions 27. Contrast of the electrophoresis display apparatus 1 is a ratio of the luminance during black display to the luminance during white display. By decreasing the luminance of reflection light in the non-pixel regions 27 during black display, it is possible to heighten the contrast of the electrophoresis display apparatus 1. In this embodiment, because the reflection reduction film 7 absorbs the light 28, the light 28 that proceeds to the observer during black display can be reduced. As a result, it is possible to heighten the contrast of the electrophoresis display apparatus 1.

A reflectivity of the pixel regions 6 during black display is approximately 5%. A reflectivity of the reflection reduction film 7 arranged on the non-pixel regions 27 is preferably 10% or less of the light 28 having a wavelength of 380 nm to 750 nm, and is more preferably 5% or less of the same. A reflectivity of the non-pixel regions 27 when the reflection reduction film 7 is not arranged is 15%. By reducing the reflection in the non-pixel regions 27 below the reflection when the reflection reduction film 7 is not arranged, it is possible to heighten the contrast of the electrophoresis display apparatus 1 and obtain an easy-to-view screen.

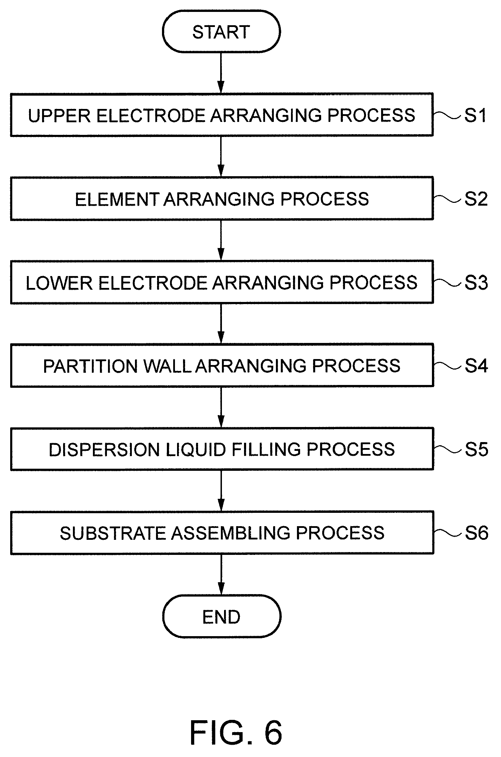

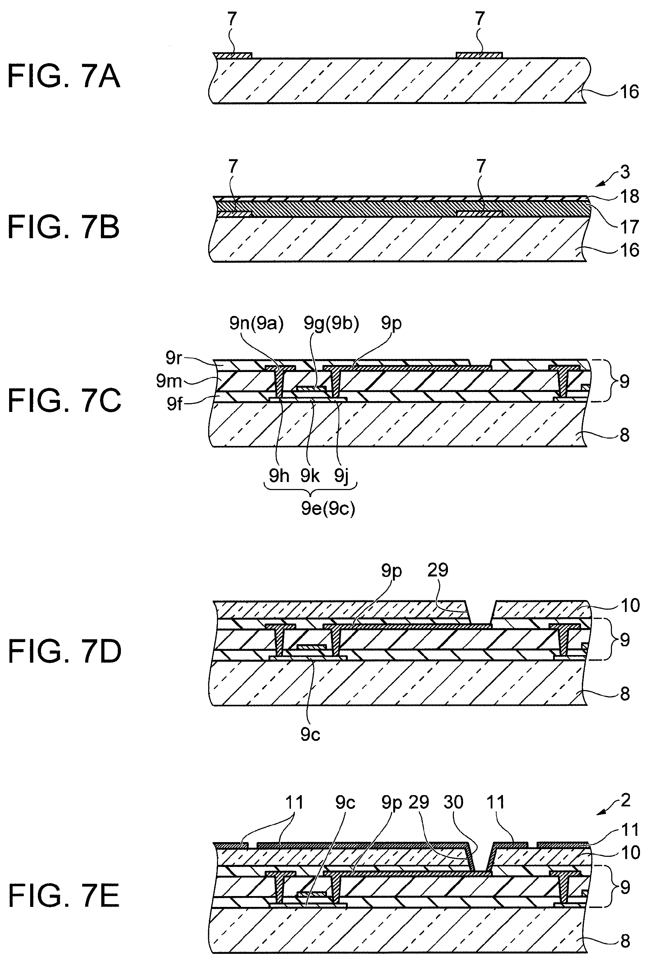

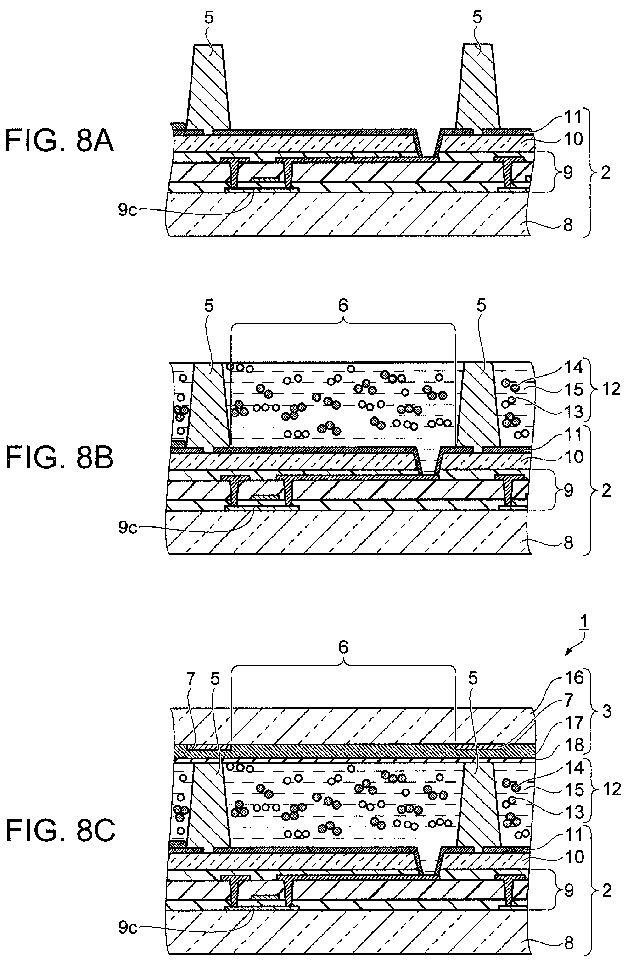

Next, the above-described manufacturing method of the electrophoresis display apparatus 1 will be described with reference to Figs. 6 to 8C. Fig. 6 is a flowchart of a manufacturing method of an electrophoresis display apparatus, and Figs. 7A and 8C are schematic diagrams for describing the manufacturing method of the electrophoresis display apparatus. In the flowchart of Fig. 6, step S1 corresponds to an upper electrode arranging process. This process is a process of arranging the reflection reduction film 7, the common electrode 17 and the adhesion layer 18 on the upper substrate 3. Next, the procedure advances to step S2. Step S2 is an element arranging process. This process is a process of arranging the element layer 9 on the first base member 8. Next, the procedure advances to step S3. Step S3 is a lower electrode arranging process. This process is a process of arranging the insulation layer 10, the through-electrodes 9d and the pixel electrodes 11 on the element layer 9. Next, the procedure advances to step S4.

Step S4 is a partition wall arranging process. This process is a process of arranging the partition walls 5 on the lower substrate 2. Next, the procedure advances to step S5. Step S5 is a dispersion liquid filling process. This process is a process of filling the pixel regions 6 with the electrophoresis dispersion liquid 12. Next, the procedure advances to step S6. Step S6 is a substrate assembling process. This process is a process of adhering the partition walls 5 and the upper substrate 3 to each other. The aforementioned processes complete manufacturing the electrophoresis display apparatus 1.

Next, the manufacturing method will be described in detail in correspondence with the steps shown in Fig. 6 with reference to Figs. 7A to 8C.

First, the upper substrate 3 is manufactured. Figs. 7A and 7B are diagrams corresponding to the upper electrode arranging process of step S1. As shown in Fig. 7A, the second base member 16 is prepared. A plate having a predetermined thickness and small surface roughness obtained by grinding and polishing a glass plate is used for the second base member 16. Next, the reflection reduction film 7 is arranged on the second base member 16. A molybdenum film is formed on the second base member 16 using a film forming method such as a spattering method. Next, the molybdenum film is patterned by a photolithography method to form the reflection reduction film 7. The plane shape of the reflection reduction film 7 is a grid shape. Subsequently, as shown in Fig. 7B, the common electrode 17 is arranged on the second base member 16 and the reflection reduction film 7. Using a film forming method such as a spattering method, an ITO film having a film thickness of approximately 100 nm is formed on the second base member 16 and the reflection reduction film 7. Next, the ITO film is patterned using the photolithography method and an etching method, to form the common electrode 17.

Next, the adhesion layer 18 is arranged on the common electrode 17. The adhesion layer 18 can be arranged using various printing methods, for example, an inkjet method, offset printing, screen printing, letterpress printing such as flexographic printing, or intaglio printing such as gravure printing. In addition, a spin coating method, a roll coating method, a die coating method, a slit coating method, a curtain coating method, a spray coating method, a die coating method, or a dip coating method may be used.

Subsequently, the lower substrate 2 is manufactured. Fig. 7C is a diagram corresponding to the element arranging process of step S2. As shown in Fig. 7C, in step S2, the first base member 8 is prepared. A plate having a predetermined thickness and small surface roughness obtained by grinding and polishing a glass plate is also used for the first base member 8. The element layer 9 is formed on the first base member 8. Because a method for forming the element layer 9 is known, detailed description thereof is omitted, and an outline of the manufacturing method will be described. There is a plurality of methods for forming the element layer 9, and there are no particular limitations thereon.

First, an underlying insulation film of SiO₂ (not illustrated) is formed on the first base member 8 by a CVD method (chemical vapor deposition). Next, an amorphous silicon film having a film thickness of approximately 50 nm is formed on the underlying insulation film by the CVD method or the like. The amorphous silicon film is crystalized by a laser crystallization method or the like, and a polycrystal silicon film is formed. Subsequently, a semiconductor film 9e, which is an island-shaped polycrystal silicon film, is formed using the photolithography method, the etching method and the like.

Next, a gate insulation film 9f is arranged so as to cover the semiconductor film 9e and the underlying insulation film. The gate insulation film 9f is a SiO₂ film having a film thickness of approximately 100 nm. The gate insulation film 9f is formed using the CVD method or the like. Next, an Mo film having a film thickness of approximately 500 nm is formed on the gate insulation film 9f using the spattering method or the like. Subsequently, the Mo film is patterned by the photolithography method and the etching method to form an island-shaped gate electrode 9g. Next, a source region 9h, a drain region 9j, and a channel forming region 9k are formed by implanting impurity ions into the semiconductor film 9e by an ion implantation method. Subsequently, a first interlayer insulation film 9m is arranged so as to cover the gate insulation film 9f and the gate electrode 9g. The first interlayer insulation film 9m is a SiO₂ film having a film thickness of approximately 800 nm. This first interlayer insulation film 9m is formed using the spattering method or the like.

Next, a contact hole that reaches the source region 9h and a contact hole that reaches the drain region 9j are formed on the first interlayer insulation film 9m. Subsequently, an Mo film having a film thickness of approximately 500 nm is formed on the first interlayer insulation film 9m and in the contact holes by the spattering method or the like, and is patterned by the photolithography method and the etching method to form a source electrode 9n, the drain electrode 9p and wiring.

A Si₃N₄ film having a film thickness of approximately 800 nm is formed so as to cover the first interlayer insulation film 9m, the source electrode 9n, the drain electrode 9p and wiring, and forms a second interlayer insulation film 9r. The second interlayer insulation film 9r is patterned using the photolithography method and the etching method to form a contact hole thereon.

Figs. 7D and 7E are diagrams corresponding to the lower electrode arranging process of step S3. As shown in Fig. 7D, the insulation layer 10 is arranged on the element layer 9 in step S3. First, a solution in which acrylic resin is dissolved is applied to the element layer 9, dried, and solidified. Next, the insulation layer 10 is patterned by the photolithography method. The external shape of the insulation layer 10 and the shape of a through hole 29 are formed by the patterning. Subsequently, the insulation layer 10 is etched using an etching liquid to form the through hole 29.

As shown in Fig. 7E, an Al film having a film thickness of approximately 500 nm is formed on the insulation layer 10 and in the through hole 29 using a film forming method such as the spattering method or vapor deposition. Furthermore, an Au film is laminated on the Al film by the spattering method, vapor deposition or the like. Subsequently, the Al film and the Au film are patterned by the photolithography method, and are etched, thereby forming the pixel electrodes 11 and a conductive film 30. A dry etching method can be used for the etching. The conductive film 30 brings the drain electrode 9p into conduction with the pixel electrodes 11.

Fig. 8A is a diagram corresponding to the partition wall arranging process of step S4. As shown in Fig. 8A, the partition walls 5 are arranged on the pixel electrodes 11 in step S4. First, a photosensitive resin material that is to be the material of the partition walls 5 is applied to the pixel electrodes 11. The arrangement can be performed using various printing methods such as offset printing, screen printing, or letterpress printing as an applying method. Additionally, coating methods such as a spin coating method or a roll coating method may be used. Subsequently, the photosensitive resin material is heat-dried and is solidified. Next, the photosensitive resin material is patterned by the photolithography method and etched, thereby forming the partition walls 5.

Fig. 8B is a diagram corresponding to the dispersion liquid filling process of step S5. As shown in Fig. 8B, the first base member 8 on which the partition walls 5 are arranged is arranged in a container (not illustrated) in step S5. The white charged particles 13 and the black charged particles 14 are then added to the dispersion medium 15, which is then stirred, thereby preparing the electrophoresis dispersion liquid 12. Next, the electrophoresis dispersion liquid 12 is supplied to the pixel regions 6 using a supplying instrument such as a syringe. As a method for supplying the electrophoresis dispersion liquid 12, various printing methods or the inkjet method can be used. The electrophoresis dispersion liquid 12 is supplied to an extent of spilling from the pixel regions 6.

Fig. 8C is a diagram corresponding to the substrate assembling process of step S6. As shown in Fig. 8C, the upper substrate 3 is arranged on the partition walls 5 in step S6. First, the lower substrate 2 to which the electrophoresis dispersion liquid 12 has been supplied is arranged in a pressure reducing chamber. Next, the upper substrate 3 is mounted on the partition walls 5. Subsequently, the pressure in the pressure reducing chamber is reduced and ultraviolet rays are irradiated onto the adhesion layer 18. The adhesion layer 18 is made of an ultraviolet curing type adhesive, and the partition walls 5 and the upper substrate 3 are provisionally fixed. Next, the lower substrate 2, on which the upper substrate 3 has been arranged, is heated such that the adhesion layer 18 is solidified, whereby the upper substrate 3 is fixed to the partition walls 5. The electrophoresis display apparatus 1 is completed by the aforementioned processes.

As described above, in accordance with this embodiment, the following effects are obtained.
(1) According to this embodiment, the light 28 irradiated onto the electrophoresis display apparatus 1 is irradiated onto the reflection reduction film 7 and the pixel regions 6. The reflection reduction film 7 reduces reflection of the light 28. Therefore, the light 28 that proceeds from the reflection reduction film 7 toward an observer can be reduced. As a result, reflection in the non-pixel regions 27 is reduced, thereby making it possible to heighten the contrast.
(2) According to this embodiment, the reflection reduction film 7 is positioned between the second base member 16 and the partition walls 5. The light 28 irradiated onto the second base member 16 is irradiated onto the reflection reduction film 7 and the pixel regions 6. The reflection reduction film 7 reduces reflection of the irradiated light 28. A portion of the light 28 irradiated onto the pixel regions 6 proceeds obliquely to the thickness direction of the second base member 16. This portion of the light 28 proceeds into the partition walls 5 without passing through the reflection reduction film 7. The light 28 that heads from the partition walls 5 toward the observer without passing through the pixel regions 6 passes through the reflection reduction film 7, and thus the intensity of the light 28 is reduced. Therefore, the light 28 that proceeds from other than the pixel regions 6 toward the observer can be reduced.
(3) According to this embodiment, the reflection reduction film 7 is positioned in a location near the second base member 16. Therefore, light reflected by the surface on the -Z direction side of the second base member 16 can be reliably reduced.

### Second Embodiment

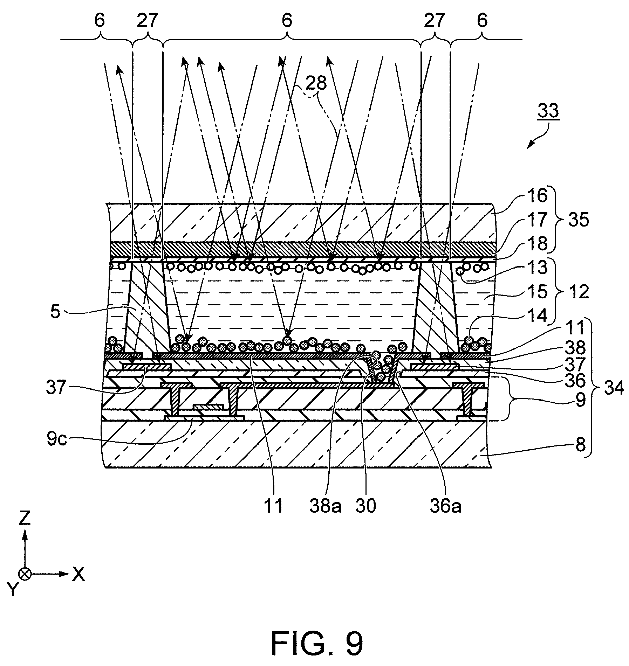

Next, one embodiment of an electrophoresis display apparatus will be described with reference to Fig. 9. Fig. 9 is a schematic side cross-sectional view showing the structure of the electrophoresis display apparatus. This embodiment is different from the first embodiment in that the reflection reduction film 7 is arranged on the lower substrate 2. Note that description on the same points as the first embodiment is omitted.

Specifically, in this embodiment, as shown in Fig. 9, an electrophoresis display apparatus 33 is provided with a lower substrate 34 and an upper substrate 35, and has a structure in which the lower substrate 34 and the upper substrate 35 sandwich the electrophoresis dispersion liquid 12 and the partition walls 5. The lower substrate 34 has a structure in which the element layer 9, a first insulation layer 36, a reflection reduction film 37 as the reflection reduction part, a second insulation layer 38 and the pixel electrodes 11 are laminated in this order on the first base member 8.

As a material of the first insulation layer 36 and the second insulation layer 38, the same material as the insulation layer 10 in the first embodiment can be used. As a material of the reflection reduction film 37, the same material as the reflection reduction film 7 in the first embodiment can be used. The reflection reduction film 37 absorbs the light 28 and reduces reflection of the light 28.

The upper substrate 35 has the common electrode 17 and the adhesion layer 18 that are laminated in this order on the second base member 16. The reflection reduction film 7 is not arranged on the upper substrate 35. Therefore, the light 28 irradiated onto the non-pixel regions 27 passes through the upper substrate 35 and is irradiated onto the partition walls 5. Furthermore, the light 28 irradiated onto the partition walls 5 reaches the reflection reduction film 37 and is absorbed by the reflection reduction film 37. Therefore, the light 28 irradiated onto the non-pixel regions 27 is absorbed by the reflection reduction film 37, and therefore reflection light can be reduced in the non-pixel regions 27.

A manufacturing process of the lower substrate 34 will be outlined. In the upper electrode arranging process of step S1, a process of forming the reflection reduction film 7 is deleted from the processes of the first embodiment. The element arranging process of step S2 is the same process as the process of the first embodiment. In the lower electrode arranging process of step S3, the first insulation layer 36 is arranged on the element layer 9. First, a solution in which acrylic resin is dissolved is applied to the element layer 9, dried, and solidified. Next, a film of acrylic acid resin is patterned by the photolithography method to form the external shape of the first insulation layer 36 and the shape of a through hole 36a. Subsequently, the film of acrylic acid resin is etched using an etching liquid so as to form the external shape of the first insulation layer 36 and the through hole 36a.

Next, a process of arranging the reflection reduction film 37 on the first insulation layer 36 is performed. A molybdenum film is formed on the first insulation layer 36 using a film forming method such as the spattering method or a vapor deposition method. Next, the molybdenum film is patterned using the photolithography method and the etching method to form the reflection reduction film 37. The plane shape of the reflection reduction film 37 is a grid shape.

Subsequently, the second insulation layer 38 is arranged on the first insulation layer 36. A solution in which acrylic resin is dissolved is applied to the first insulation layer 36 and the reflection reduction film 37, dried, and solidified. Next, a film of acrylic resin is patterned by the photolithography method to form the external shape of the second insulation layer 38 and the shape of a through hole 38a. Subsequently, the film of acrylic resin is etched using the etching method so as to form the external shape of the second insulation layer 38 and the through hole 38a.

Next, Al films are formed on the second insulation layer 38 and in the through hole 38a using a film forming method such as the spattering method. Furthermore, Au films are laminated on the Al films by the spattering method, vapor deposition or the like. Subsequently, the pixel electrodes 11 and the conductive film 30 are formed from the Al films and the Au films using the photolithography method and the etching method. The dry etching method can be used for the etching. The conductive film 30 is a film that brings the drain electrode 9p into conduction with the pixel electrodes 11. The lower substrate 34 is formed by the aforementioned process.

As described above, according to this embodiment, the following effects are obtained.
(1) According to this embodiment, the light 28 irradiated onto the non-pixel regions 27 is absorbed by the reflection reduction film 37. Therefore, reflection light can be reduced in the non-pixel regions 27, thereby making it possible to display the screen with good contrast.
(2) According to this embodiment, the reflection reduction film 37 is positioned on the first base member 8 side relative to the partition walls 5. Therefore, even if the reflection reduction film 37 is larger than the partition walls 5, the area of the pixel regions 6 does not decrease. As a result, it is possible to prevent the opening ratio from decreasing even if the reflection reduction film 37 is arranged. Note that the opening ratio is a value obtained by dividing the total area of the pixel regions 6 by the total area of the pixel regions 6 and the non-pixel regions 27. The larger the opening ratio is, the brighter the white display can be.

### Third Embodiment

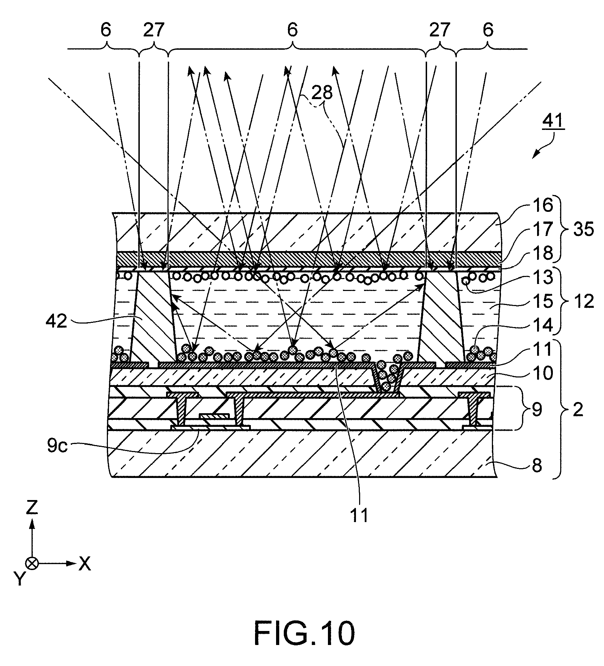

Next, one embodiment of an electrophoresis display apparatus will be described with reference to Figs. 10 to 11C. Fig. 10 is a schematic side cross-sectional view showing the structure of the electrophoresis display apparatus. This embodiment is different from the first embodiment in that the partition walls 5, instead of the reflection reduction film 7, absorb the light 28. Note that description on the same points as the first embodiment is omitted.

Specifically, in this embodiment, as shown in Fig. 10, an electrophoresis display apparatus 41 is provided with the lower substrate 2 and the upper substrate 35, and has a structure in which the lower substrate 2 and the upper substrate 35 sandwich the electrophoresis dispersion liquid 12, and partition walls 42 as the partition wall part and the reflection reduction part. Similarly to the second embodiment, the upper substrate 35 has the common electrode 17 and the adhesion layer 18 that are laminated in this order on the second base member 16. The reflection reduction film 7 is not arranged on the upper substrate 35. Therefore, the light 28 irradiated onto the non-pixel regions 27 passes through the upper substrate 35 and is irradiated onto the partition walls 42.

It is sufficient that a material of the partition walls 42 is a material that has a low reflectivity of the light 28, an insulating property and good workability, and there are no particular limitations thereon. As the material of the partition walls 42, resin such as acrylic resin or epoxy resin containing a carbon filler can be used, for example. A carbon filler is a filler that is mainly composed of carbon. The higher the filler concentration in the resin is, the lower the reflectivity of the light 28 can be. On the other hand, the higher the filler concentration in the resin is, the more the volume resistivity of the resin decreases and the insulating property decreases. In this embodiment, acrylic resin containing a carbon filler is adopted, for example.

The light 28 entering from the upper substrate 35 of the non-pixel regions 27 is irradiated onto the partition walls 42. Because the light 28 irradiated onto the partition walls 42 is absorbed by the partition walls 42, the intensity of the light reflected by the partition walls 42 is reduced. Therefore, the light 28 that enters from the non-pixel regions 27 and proceeds from the non-pixel regions 27 toward an observer can be reduced.

In this embodiment, the width of the partition wall 42 is 5 µm, and the height of the partition wall 42 is 30 µm. The length of the partition wall 42 as one side of the square pixel regions 6 is 80 µm. The volume resistivity of the partition walls 42 is 2.81×10⁵ Ωcm. At this time, the resistance of the partition walls 42 between the lower substrate 2 and the upper substrate 35 is 1.5×10⁹ Ω. In addition, a current passing through the partition walls 42 when a voltage of 15 V is applied between the pixel electrodes 11 and the common electrode 17 is 1x10⁻⁸A. It was confirmed that the electrophoresis display apparatus 41 can be driven in a stable manner at this current value. Therefore, by the resistance of the partition wall 42 as one side of the pixel regions 6 being 1.5×10⁹ Ω or more, it is possible to drive the electrophoresis display apparatus 41 in a stable manner.

In this embodiment, the reflectivity of the non-pixel regions 27 during black display was set to 5% or less by adjusting the filler concentration in the resin. The resistance of the partition walls 42 could be set to 1.5×10⁹ Ω or more. Therefore, the electrophoresis display apparatus 41 could perform display with good contrast in a stable manner.

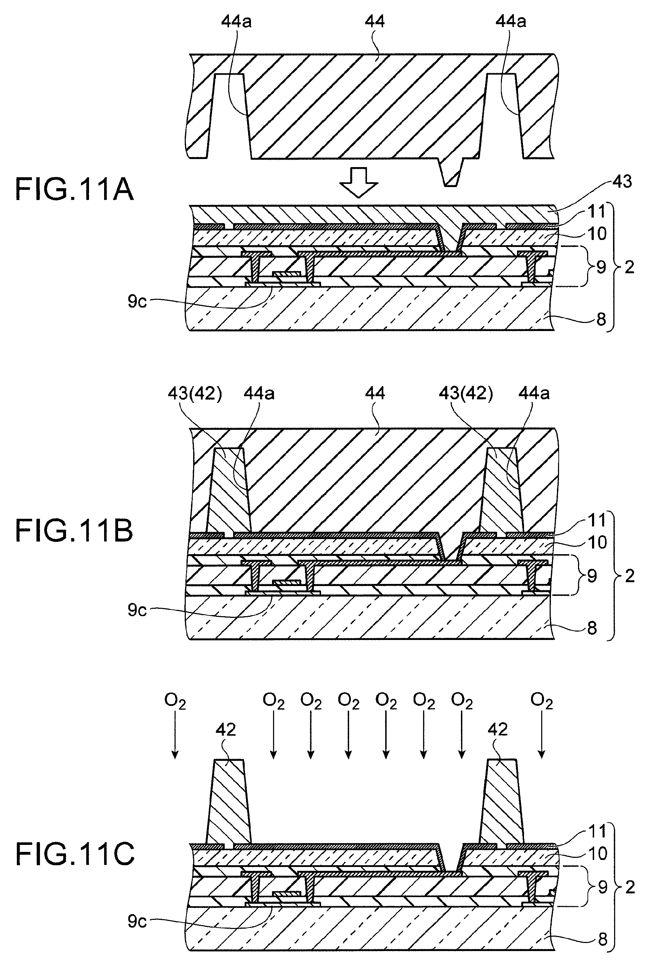

Figs. 11A to 11C are schematic diagrams for describing a manufacturing method of the partition wall 42. A manufacturing process of the lower substrate 2 will be outlined with reference to Figs. 11A to 11C. As shown in Fig. 11A, in the partition wall arranging process of step S4, a resin film 43 of acrylic resin containing a carbon filler is arranged on the lower substrate 2. The volume resistivity of the resin film 43 of acrylic resin is set to 2.81 ×10⁵ Ω cm by adjusting the filler concentration in the resin. A solution in which acrylic resin containing a carbon filler is dissolved is applied to the lower substrate 2, dried, and solidified. As a result, the resin film 43 is arranged on the lower substrate 2. The resin film 43 has hardness that allows for deformation.

Next, as shown in Fig. 11B, a mold 44 is pressed against the resin film 43. Recesses 44a having the shape of the partition wall 42 are formed in the mold 44. The resin film 43 is pressed against the mold 44 and flows into the recesses 44a. A heater (not illustrated) for heating the mold 44 is arranged on the mold 44. Next, the heater is turned on and the resin film 43 is heated via the mold 44. Thereby, the resin film 43 cures and becomes the partition walls 42. The resistance of the partition walls 42 is set to 1.5×10⁹ Ω or more by adjusting the filler concentration in the resin.

The surface of the lower substrate 2 is covered by the thin resin film 43. Next, the lower substrate 2 is arranged in an ashing apparatus (not illustrated). As shown in Fig. 11C, oxygen gas is turned into plasma by non-ionizing radiation, and the oxygen gas that has turned into plasma is caused to flow onto the surface of the lower substrate 2. The resin film 43 that is not part of the partition walls 42 is coupled to oxygen radicals in the plasma to form carbon dioxide and water, and evaporates and exfoliates. The partition walls 42 are formed by the aforementioned process. Then, the dispersion liquid filling process of step S5 and the substrate assembling process of step S6 are performed, and the electrophoresis display apparatus 41 is completed.

As described above, in accordance with this embodiment, the following effects are obtained.
(1) According to this embodiment, the light 28 entering from the upper substrate 35 of the non-pixel regions 27 is irradiated onto the partition walls 42. The intensity of the light 28 irradiated onto the partition walls 42 is reduced. Therefore, the light 28 that enters from the non-pixel regions 27 and proceeds from the non-pixel regions 27 toward the observer can be reduced.
(2) According to this embodiment, a portion of the light 28 irradiated onto the pixel regions 6 proceeds obliquely to the thickness direction of the upper substrate 35. This portion of the light 28 passes through the upper substrate 35 of the pixel regions 6 and is irradiated onto the partition walls 42. The intensity of the light 28 irradiated onto the partition walls 42 is reduced. Therefore, the light 28 that enters from the pixel regions 6 and proceeds from the non-pixel regions 27 toward the observer can be reduced.
(3) According to this embodiment, because the partition walls 42 insulate the pixel electrodes 11 and the common electrode 17 from each other, it is possible to prevent the pixel electrodes 11 and the common electrode 17 from being brought into conduction with each other.
(4) According to this embodiment, the partition walls 42 absorb the light 28. Therefore, because the area of the pixel regions 6 is not reduced, it is possible to prevent the opening rate from decreasing.
(5) According to this embodiment, a process for arranging the reflection reduction film 7 or the reflection reduction film 37 is not added. Therefore, the electrophoresis display apparatus 41 can be manufactured with good productivity.

### Fourth Embodiment

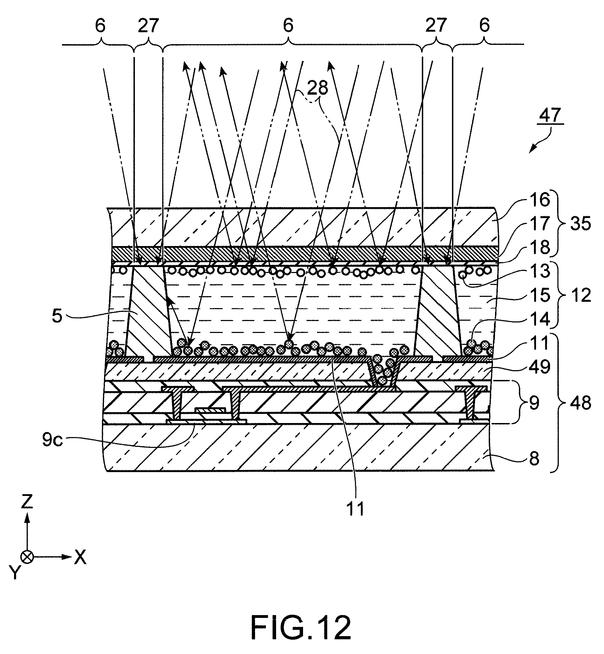

Next, one embodiment of an electrophoresis display apparatus will be described with reference to Fig. 12. Fig. 12 is a schematic side cross-sectional view showing the structure of the electrophoresis display apparatus. This embodiment is different from the first embodiment in that the insulation layer 10 of the lower substrate 2, instead of the reflection reduction film 7, absorbs the light 28. Note that description on the same points as the first embodiment is omitted.

Specifically, in this embodiment, as shown in Fig. 12, an electrophoresis display apparatus 47 is provided with a first substrate 48 and the upper substrate 35, and has a structure in which the first substrate 48 and the upper substrate 35 sandwich the electrophoresis dispersion liquid 12 and the partition walls 5. Similarly to the second embodiment, the upper substrate 35 has the common electrode 17 and the adhesion layer 18 that are laminated on the second base member 16 in this order. The reflection reduction film 7 is not arranged on the upper substrate 35. Therefore, the light 28 irradiated onto the non-pixel regions 27 passes through the upper substrate 35 and is irradiated onto the partition walls 5.

The first substrate 48 has the element layer 9, an insulation layer 49 as the reflection reduction part and the pixel electrodes 11 that are laminated on the first base member 8 in this order. The insulation layer 49 has a function of absorbing the light 28. It is sufficient that a material of the insulation layer 49 is a material that has a low reflectivity of the light 28, an insulating property and good workability, and there are no particular limitations thereon. As the material of the insulation layer 49, the same material as the material of the partition walls 42 in the third embodiment can be used. In this embodiment, acrylic resin containing a carbon filler is adopted as the material of the insulation layer 49, for example.

In this embodiment, the volume resistivity of the insulation layer 49 is 2.81 ×10⁵ Ωcm. At this time, it was confirmed that the electrophoresis display apparatus 47 can be driven in a stable manner. Therefore, the electrophoresis display apparatus 47 can be driven in a stable manner by setting the volume resistivity of the insulation layer 49 to 2.81 × 10⁵ Ωcm or more.

In this embodiment, the reflectivity of the non-pixel regions 27 during black display was set to 5% or less by adjusting the filler concentration in the resin. The volume resistivity of the insulation layer 49 could be set to 2.81 ×10⁵ Ωcm or more. Therefore, the electrophoresis display apparatus 47 could perform display with good contrast in a stable manner.

As described above, in accordance with this embodiment, the following effects are obtained.
(1) According to this embodiment, the insulation layer 49 reduces reflection of the light 28. The light 28 entered from the upper substrate 35 of the non-pixel regions 27 passes through the partition walls 5 and is irradiated onto the insulation layer 49. The intensity of the light 28 irradiated onto the insulation layer 49 is reduced. Therefore, the light 28 that enters from the non-pixel regions 27 and proceeds from the non-pixel regions 27 toward the observer can be reduced.
(2) According to this embodiment, a portion of the light 28 that entered from the upper substrate 35 of the pixel regions 6 passes through the electrophoresis dispersion liquid 12 and is irradiated onto the insulation layer 49. The intensity of the light 28 irradiated onto the insulation layer 49 is reduced. Therefore, the light 28 that enters from the pixel regions 6, is reflected by the insulation layer 49, passes through the non-pixel regions 27 and proceeds toward the observer can be reduced.
(3) According to this embodiment, because the insulation layer 49 insulates the pixel electrodes 11 and the voltage supply lines 9a from each other, it is possible to prevent the pixel electrodes 11 and the voltage supply lines 9a from being brought into conduction with each other.
(4) According to this embodiment, the insulation layer 49 absorbs the light 28. Therefore, because the area of the pixel regions 6 is not reduced, it is possible to prevent the opening rate from decreasing.
(5) According to this embodiment, a process of arranging the reflection reduction film 7 or the reflection reduction film 37 is not added. Therefore, the electrophoresis display apparatus 47 can be manufactured with good productivity.

### Fifth Embodiment

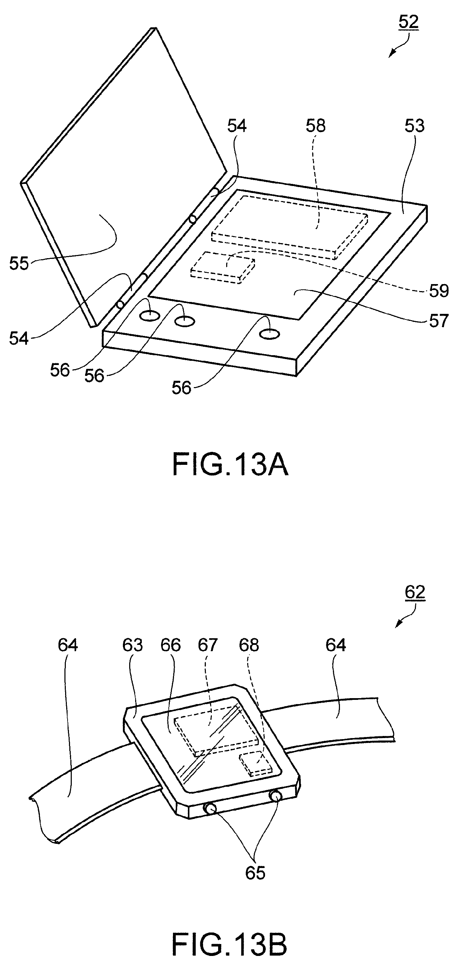

Next, one embodiment of electronic devices having an electrophoresis display apparatus equipped therewith will be described with reference to Figs. 13A and 13B. Fig. 13A is a schematic perspective diagram showing the structure of an electronic book, and Fig. 13B is a schematic perspective diagram showing the structure of a watch. As shown in Fig. 13A, an electronic book 52 as the electronic device is provided with a plate-like a case 53. A lid part 55 is arranged on the case 53 via hinges 54. Furthermore, operation buttons 56 and a display part 57 are arranged on the case 53. An operator can perform operation on content that is displayed on the display part 57 by operating the operation buttons 56.

A control part 58 for controlling the electronic book 52 and a drive part 59 for driving the display part 57 are arranged inside the case 53. The control part 58 outputs display data to the drive part 59. The drive part 59 inputs the display data and drives the display part 57. The drive part 59 then causes the display part 57 to display content corresponding to the display data. One of the electrophoresis display apparatus 1, the electrophoresis display apparatus 33, the electrophoresis display apparatus 41 and the electrophoresis display apparatus 47 is used as the display part 57. Therefore, the electronic book 52 can be an apparatus having an electrophoresis display apparatus provided as the display part 57, the electrophoresis display apparatus being capable of performing display with good contrast.

As shown in Fig. 13B, a watch 62 as the electronic device is provided with a plate-like case 63. A band 64 is arranged on the case 63, and an operator can fix the watch 62 on his/her wrist by wrapping the band 64 around the wrist. Furthermore, operation buttons 65 and a display part 66 are arranged on the case 63. The operator can perform operation on content that is displayed on the display part 66 by operating the operation buttons 65.

A control part 67 for controlling the watch 62 and a drive part 68 for driving the display part 66 are arranged inside the case 63. The control part 67 outputs display data to the drive part 68. The drive part 68 inputs the display data and drives the display part 66. The drive part 68 then causes the display part 66 to display content corresponding to the display data. One of the electrophoresis display apparatus 1, the electrophoresis display apparatus 33, the electrophoresis display apparatus 41 and the electrophoresis display apparatus 47 is used as the display part 66. Therefore, the watch 62 can be an apparatus having an electrophoresis display apparatus provided as the display part 66, the electrophoresis display apparatus being capable of performing display with good contrast.

Note that this embodiment is not limited to the above embodiments, and various modifications and improvements can be made thereon within the technical ideas of the invention by those skilled in the art. Modified examples will be described below.

### Modified Example 1

In the first embodiment, the white charged particles 13 and the black charged particles 14 are arranged in the electrophoresis dispersion liquid 12. In place of the white charged particles 13 and the black charged particles 14, charged particles of red, green and blue may be used. With this configuration, color display can be performed by displaying a red color, a green color, a blue color and the like.

### Modified Example 2

In the first embodiment, one pixel electrode 11 is arranged for one pixel region 6. A plurality of pixel electrodes 11 may be arranged for one pixel region 6. Then it is possible to subdivide display.

### Modified Example 3

In the first embodiment, the white charged particles 13 are positively charged and the black charged particles 14 are negatively charged. A configuration is also possible in which the white charged particles 13 are negatively charged and the black charged particles 14 are positively charged. An easy-to-control charged condition may also be achieved.

### Modified Example 4

In the first embodiment, the reflection reduction film 7 is arranged on the upper substrate 3. In the second embodiment, the reflection reduction film 37 is arranged on the lower substrate 34. A structure may be adopted in which the upper substrate 3 provided with the reflection reduction film 7 and the lower substrate 34 provided with the reflection reduction film 37 sandwich the electrophoresis dispersion liquid 12. The reflection reduction film 7 and the reflection reduction film 37 make it possible to display a screen with even better contrast.

In the third embodiment, the partition walls 42 absorb the light 28. A structure may be adopted in which the upper substrate 3 provided with the reflection reduction film 7 and the lower substrate 34 provided with the reflection reduction film 37 sandwich the electrophoresis dispersion liquid 12 and the partition walls 42. The reflection reduction film 7, the reflection reduction film 37 and the partition walls 42 make it possible to display a screen with even better contrast.

Additionally, a structure may be adopted in which the upper substrate 3 provided with the reflection reduction film 7 and the lower substrate 2 not provided with the reflection reduction film 37 sandwich the electrophoresis dispersion liquid 12 and the partition walls 42. Additionally, a structure may be adopted in which the upper substrate 35 not provided with the reflection reduction film 7 and the lower substrate 34 provided with the reflection reduction film 37 sandwich the electrophoresis dispersion liquid 12 and the partition walls 42.

In the fourth embodiment, the insulation layer 49 absorbs the light 28. A structure may be adopted in which the upper substrate 3 provided with the reflection reduction film 7 and the first substrate 48 provided with the insulation layer 49 sandwich the electrophoresis dispersion liquid 12. The reflection reduction film 7 and the insulation layer 49 make it possible to display a screen with even better contrast. Furthermore, a structure may be adopted in which the upper substrate 3 provided with the reflection reduction film 7 and the first substrate 48 provided with the insulation layer 49 sandwich the electrophoresis dispersion liquid 12 and the partition walls 42. The reflection reduction film 7, the insulation layer 49 and the partition walls 42 make it possible to display a screen with even better contrast.

Additionally, a structure may be adopted in which the upper substrate 35 not provided with the reflection reduction film 7 and the first substrate 48 provided with the insulation layer 49 sandwich the electrophoresis dispersion liquid 12 and the partition walls 42.

## Claims

1. An electrophoresis display apparatus comprising:
a first substrate on which a semiconductor element is arranged;
a second substrate that faces the first substrate; and
a partition wall part that is positioned between the first substrate and the second substrate and partitions pixel regions,
wherein an electrophoresis dispersion liquid containing charged particles is held in each of the regions partitioned by the partition wall part as viewed from a normal direction of the second substrate, and the electrophoresis display apparatus has, in a region that overlaps the partition wall part, a reflection reduction part that reduces reflection of light.

2. The electrophoresis display apparatus according to claim 1,
wherein the reflection reduction part is positioned between the second substrate and the partition wall part.

3. The electrophoresis display apparatus according to claim 1,
wherein the reflection reduction part is provided between the first substrate and the partition wall part.

4. The electrophoresis display apparatus according to any one of the preceding claims,
wherein the partition wall part also functions as the reflection reduction part.

5. The electrophoresis display apparatus according to any one of the preceding claims, comprising:
an element layer that is positioned on the first substrate and on which the semiconductor element is arranged; and
an insulation layer that is positioned on the element layer,
wherein the insulation layer also functions as the reflection reduction part.

6. The electrophoresis display apparatus according to any one of the preceding claims,
wherein a first electrode is arranged on the first substrate,
a second electrode is arranged on the second substrate, and
the partition wall part insulates the first electrode and the second electrode from each other.

7. The electrophoresis display apparatus according to any one of the preceding claims,
wherein a resistance value of the partition wall part partitioning two adjacent pixel regions is 1×10⁸ Ω or more.

8. An electronic device, comprising:
a display part; and
a drive part configured to drive the display part,
wherein the display part is the electrophoresis display apparatus according to any one of the preceding claims.

9. A manufacturing method of an electrophoresis display apparatus, the method comprising:
arranging a partition wall part by molding a resin material containing carbon on a first substrate;
filling an electrophoresis dispersion liquid containing a dispersion medium and charged particles into pixel regions partitioned by the partition wall part, and
arranging a second substrate so as to be layered on the partition wall part.

10. The manufacturing method of an electrophoresis display apparatus according to claim 9,
wherein a resistance value of the partition wall part partitioning two adjacent pixel regions is 1×10⁸ Ω or more.
